Europäisches Patentamt

European Patent Office

Office européen des brevets

(19)

(11) Publication number: **0 051 423**
**B1**

(12) **EUROPEAN PATENT SPECIFICATION**

(45) Date of publication of patent specification: **01.08.84**

(21) Application number: **81305064.8**

(22) Date of filing: **27.10.81**

(51) Int. Cl.³: **A 23 J 3/00, A 23 J 3/02, D 01 F 4/04**

(54) Process for the preparation of a textured rennet casein-containing material, a textured rennet casein-containing material and foodstuffs therefrom.

(30) Priority: **29.10.80 GB 8034827**

(43) Date of publication of application:
**12.05.82 Bulletin 82/19**

(45) Publication of the grant of the patent:
**01.08.84 Bulletin 84/31**

(84) Designated Contracting States:
**BE DE FR GB IT NL SE**

(56) References cited:
**FR - A - 2 345 086**

(73) Proprietor: **UNILEVER PLC**
**Unilever House Blackfriars  P O Box 68**
**London EC4P 4BQ (GB)**

(84) **GB**

(73) Proprietor: **UNILEVER NV**
**Burgemeester s'Jacobplein 1 P.O. Box 760**
**NL-3000 DK  Rotterdam (NL)**

(84) **BE DE FR IT NL SE**

(72) Inventor: **Bams, Gijsbert Willem Peter**
**Hoofdlaan 15b**
**Rotterdam (NL)**
Inventor: **Visser, Johannes**
**Lijsterlaan 122**
**Maassluis (NL)**

(74) Representative: **Dries, Antonius Johannes Maria et al,**
**Unilever N.V. Patent Division P.O. Box 137**
**NL-3130 AC Vlaardingen (NL)**

Courier Press, Leamington Spa, England.

## Description

The present invention relates to a process for the preparation of a textured rennet casein-containing material to a textured rennet casein-containing material and to foodstuffs incorporating the said material.

Texturing of casein-containing materials is a known technique to convert milk-derived materials into one or more solid forms which can have a variety of uses. A particularly important use is their employment as proteinaceous meat and fish analogues. The use of milk-derived materials can be particularly attractive due to their relative low cost and ready abundance as well as their nutritional contribution to the diet. Compositions can moreover be produced which contain no meat or fish components and are thus acceptable to certain vegetarians.

Wet-spinning of casein is known, but the process can involve a number of disadvantages compared to dry-spinning. Some of the problems associated with wet-spinning edible fibres are discussed in our UK Patent Specification No. 1 474 179. Before casein can be dry-spun into fibres however, the casein micelles present in milk and milk derived products have to be modified.

The present invention aims at producing fibers based on rennet casein.

It has already been proposed to process casein or casein-containing materials. A casein-containing component suitable for dry spinning comprising at least 30 wt% casein, and certain amounts of calcium ions and of an edible salt of orthophosphoric acid is disclosed in the GB patent specification No. 1,474,179.

The casein used is obtained by acid precipitation from milk or skim milk, and has to be used in the form of a calcium salt of casein, commercially available or prepared in situ. A casein-containing composition suitable for dry-spinning is also disclosed in GB patent specification No. 1,572,395. This composition contains 90—30 wt% casein and 10—70 wt% of at least one heat-settable protein, the casein part also being converted into calcium caseinate and an orthophosphate being added. Both these inventions are very useful for obtaining dry-spun fibres from casein isolated by acid precipitation. However, they cannot be used when starting from whole or skim milk powder, as the casein therein is naturally present as stable individual submicron micellar aggregates: from the powder the milk can be reconstituted without difficulty. A solution therefor is disclosed in GB patent specification No. 1,574,448. Whereas in the process starting from acid precipitated casein the calcium content has to be increased, in the process starting from whole or skim milk powder the calcium content has to be decreased by the addition of a calcium binding agent, e.g. an alkali salt of di- or triphorphoric acid, or by subjecting an aqueous mixture of the milk solids to membrane filtration (ultrafiltration).

In both processes mentioned the de-aggregated micellar casein, which is soluble to a certain extent, has to be made less soluble to obtain stable fibres which do not fall apart when the dry-spun fibres are contacted with water or by further processing into products.

This does not apply to rennet casein. Neither the calcium caseinate of the first mentioned process nor the treated casein-containing milk powder can be replaced by rennet casein, as non-chewable products are obtained in that case.

Extrusion into a gaseous medium of a material containing a minor proportion of a casein is disclosed in US patent specification No. 3 800 053 which describes the formation of fibres consisting essentially of defatted oil seed proteins and optionally containing rennet casein. A working example employs a dope containing soy concentrate and rennet casein in proportion of 4:1 and requires an extrusion aid. The extrusion temperature necessary moreover to form an extrudable plastic mass is relatively high and may damage the protein content.

We have now discovered a process which can enable casein-containing compositions having a high casein content to be readily extruded into a gaseous medium, for example by dry-spinning, without the handling difficulties encountered in our earlier methods.

According to one aspect of the present invention there is provided a process for preparing a textured casein-containing material by extruding into a gaseous medium a plastic mass containing water and a proteinaceous material incorporating rennet casein characterised by extruding into a gaseous medium so as to form an extrudate a plastic mass containing a proteinaceous material comprising at least about 60 wt% of either rennet casein or a mixture including rennet casein and a caseinate salt, at least about 20 wt%, based on the total weight of the proteinaceous material, of the said mixture comprising rennet casein.

We have found that for example fibres can be readily formed without the use of an extrusion aid employing the present process. The fibres produced moreover can have good storage properties and can be rehydrated with water to produce a foodstuff having acceptable properties. In particular the fibres can retain their fibrous nature on rehydration and provide sufficient tensile strength to imitate the texture of meat or fish.

The extrudate may be in the form of fibres, bands, ribbons, tubes, discrete units or the like. It can be either incorporated immediately in a food composition or may be dried and stored for future use. Fibres are preferably dried to prevent their adherence to one another prior to incorporation in a foodstuff.

In the present specification the term "extruding into a gaseous medium" is intended to include "dry-spinning" and any other processes where the plastic mass is forced under pressure through a dye head into a gaseous atmosphere.

The plastic mass can have a relatively high viscosity and a minimum pressure of about 5 bar is usually required to force the mass through for example a spinneret having 70 holes each of 0.5 mm diameter. It can however be possible to employ a somewhat lower pressure in certain circumstances for example if the temperature of the plastic mass is increased or if its pH is altered. Care should however be taken to avoid denaturing the protein in the plastic mass and undesirably discolouring the plastic mass by overheating. Preferably the temperature should not exceed 100°C. More preferably the temperature should be maintained below 90°C and if possible it is preferable to avoid raising the temperature of the mass above 80°C. The natural pH of the plastic mass may vary slightly with the source of the rennet casein and with the amount of rennet casein and other materials present. This natural pH can provide a plastic mass which is very suitable for extruding the ranges from between about 6.0 and 7.0, more particularly between 6.2 and 6.5. Increasing or decreasing the natural pH for example between 4.0 and 9.0 has however been found in some cases to provide a plastic mass which is for example more readily spinnable. Caution should however be exercised in altering the pH of the plastic mass as we have found that the enhanced extrudability of the plastic mass may have only a short life. In some cases after a short time as about 5 minutes we have found that the mass becomes gel-like and is not capable of being extruded.

In a preferred embodiment the plastic mass is formed in the barrel of an extruder which also provides the pressure to cause the mass to pass through the dye head. In such an arrangement the dye head such as for example a spinneret can either form part of the head of the extruder or alternatively it can be positioned removed from the extruder head at the end of a tubular component extending from the head of the extruder. The latter arrangement is convenient when for example the barrel of the extruder extends horizontally and the spinneret is a perforated disc which also lies in a horizontal plane.

The rennet casein employed in the present process may be derived from any one of a variety of sources. It may for example be prepared directly from skimmed milk by a process resembling that employed in cheese making in which the skimmed milk is first heated to 40°C and then has added to it about .00001 parts by weight of rennet to each part of skimmed milk. Rennet is available commercially from, for example, the firm of Chris. Hansen, Copenhagen. After about 30 minutes the mixture has coagulated and the whey is removed by cheesecloth. The remaining curds can be freeze dried and then readily ground to a powder form which, when mixed with water, can be formed into the plastic mass by kneading. As an alternative to freeze drying the rennet casein can be spray dried to form a fine powder.

Spray dried rennet casein is available commercially from, for example, the firms of Meggle Milchindustrie GmbH & Ko Kg and Dena K.G. in West Germany. Supplies of rennet casein from each source have been found to operate succesfully in the present process. It should be understood that rennet casein as used in the present process need not necessarily be prepared by the action of rennet on for example skimmed milk. The term rennet casein encompasses any casein derivative identical to that produced by the action of rennet on skimmed milk. In practice rennet casein can be produced by the action of rennet or any other similarly acting proteolytic enzyme.

Spray dried or freeze dried rennet casein, each of which has a residual moisture content of about 5%, can be kneaded into a plastic mass with water in a proportion of rennet casein to water in the range of from 50:50 to 60:40 preferably from 52:48 to 58:42. The precise proportion of water to rennet casein required to form a plastic mass can vary from one sample of rennet casein to another and may depend on other materials present in the proteinaceous material. In particular if a caseinate salt is present, less water may be required due to the solubility of the caseinate salts. Preferred caseinate salts are sodium and calcium. The proportions employed however should preferably be such that the plastic mass is wet enough to be extruded as a continuous filament but without excess water remaining in the extruder.

In addition to rennet casein, and possibly a caseinate salt, the plastic mass include one or more other edible proteinaceous materials whose presence can be used to vary the extrudate's properties. We have found for example that an extrudate formed from a plastic mass consisting of only rennet casein and water is stable in a 2% NaCl solution and on rehydration can be broken down in the mouth, but may to some palates exhibit an initial toughness which would be unacceptable. When however the plastic mass contains for example a portion of soya protein the plastic mass can still be succesfully extruded and produces an extrudate which can have a degree of toughness and succulence more closely resembling tender meat or fish.

Examples of edible proteinaceous materials which can be incorporated in the plastic mass include acid casein, skimmed milk powder, gluten, vegetable protein concentrates and isolates such as soya concentrate and soya isolate, and fish, meat, blood and single cell proteins. We have found that the maximum proportion of these proteinaceous materials that can be incorporated in the plastic mass and yet still allow the ready production of an extrudate is about 40% based upon the total weight of solids present.

Sodium and calcium caseinate can be mixed with rennet casein in any proportion without prohibiting the formation of for example fibres. We have found however that the plastic mass whose solids content contains more than about 40% sodium and/or calcium caseinate may produce a fibre which on rehydration can be too soft for acceptable incorporation in a foodstuff. If the proportion of calcium and/ sodium caseinate is increased to about 80% the fibres are preferably subject to post-heating at a temperature between 100°C and 200°C e.g. for about 7 minutes at 180°C or 16 minutes at 110°C. The post-heating treatment renders the fibres tougher and less soluble in 2% NaCl solution than fibres of a similar composition which have not undergone this extra treatment.

Extrudate in the form of fibres including sodium and/or calcium caseinate can be particularly suited for incorporation in fish containing foodstuffs. The fibres are white and when they contain a proportion of sodium and/or calcium caseinate to rennet casein of from 40:60 to 20:80 the fibres have a mouth feel closely resembling fish.

The presence of a soya protein, either in the form of an isolate or concentrate, gives the fibres a brown/yellow colour as well as increasing the succulence of the fibres. Due to their colour soya containing fibres can be included in beef or poultry-containing products. If necessary artificial colouring matter may be added. The colour of the fibres can also be effected by post heating of the fibres.

According to a second aspect of the present invention there is provided a textured casein-containing material produced by extrusion into a gaseous medium characterised in that the material includes a proteinaceous material comprising at least about 60 wt% of either rennet casein or a mixture of rennet casein and a caseinate salt at least 20 wt% of the mixture, based on the total weight of the proteinaceous material, comprising rennet casein.

It is to be understood that the present invention relates to extrudates produced by the present process. It is to be further understood that the present invention relates to foodstuffs incorporating the extrudates and/or the textured casein-containing material of the present invention.

Embodiments of the present invention will now be described by way of example only with reference to the accompanying drawings; wherein:

Figure 1 illustrates in diagrammatic form apparatus for carrying out a process embodying the present invention;

Figure 2 also in diagrammatic form, illustrates the layout of an apparatus for performing the present process on a production scale.

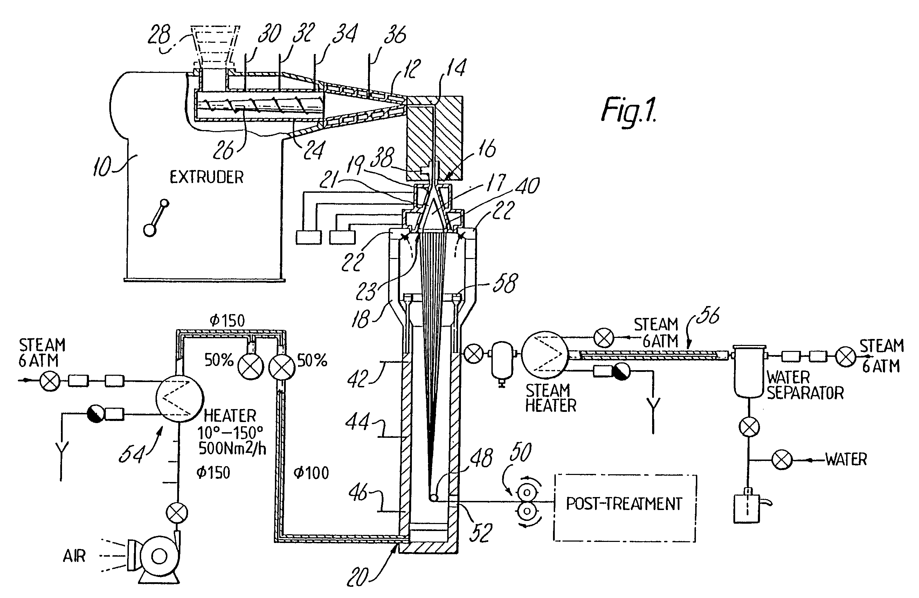

Referring firstly to Figure 1, the apparatus includes an extruder 10 whose head 12 is connected by means of a tubular extension 14 to a spinning head 16. The spinning head lies at the head of a drying shaft 18 having gas inlet and output ports 20 and 22 respectively. The extruder includes a single barrel 24 containing a single screw 26 whose shaft diameter increases along the length of the barrel towards the extruder head. An inlet hopper 28 leads into the interior of the barrel 24 at the end of the extruder away from the extruder head. Temperature regulators 30, 32 and 34 are distributed along the length of the extruder barrel and a pressure sensor 36 is positioned in the vicinity of the extruder head. A pressure sensor 38 is located at the exit end of the tubular extension 14 immediately above the spinning head 16.

The spinning head 16 includes a filter plate (not shown in Fig. 1) and a solid cone 17 which with the side wall 19 of the head 16 provides a passage 21 leading to a spinneret 23. The spinneret 23 comprises a disc having a plurality of holes arranged around its periphery in register with the passageway 21. The diameter of the holes determines the diameter of the fibres, a spinneret with holes of different diameter being substituted if desired. A temperature sensor 40 is located in the spinning head 16 in the vicinity of the spinneret 23.

Temperature sensorts 42, 44 and 46 are spaced at intervals along the drying shaft 18. A take-up unit is located at the lower end of the shaft and comprises a horizontally mounted roller 48 within the shaft and contrary rotating rollers 50 located outside the shaft in line with an exit aperture 52 in the shaft wall.

The gaseous medium present in the shaft is preferably hot air heated and pumped by apparatus generally donted by 54 which delivers the air to the shaft and port 20. The apparatus generally referenced 56 provides steam under pressure which can be fed to a perforated ring 58 located in a horizontal plane in an upper portion of the shaft 18.

In use the starting materials are added to the hopper 28 and are kneaded in the extruder to form a plastic mass. The temperature regulators 30, 32 and 34 are set to predetermined values. The plastic mass exits from the extruder after a residence time of about 2 minutes and passes to the spinneret 23 through which it is forced by the pressure developed in the extruder. The mass exits from spinning head as a plurality of fibres which are dried by hot air flowing up the shaft. If desired, steam can be emitted from the ring 58 and the fibres tensioned so as to stretch them and reduce the fibre diameter. The fibres are guided around the roller 48 and drawn out of the shaft by means of the contrary rotating rollers 50. The temperature of the drying air and its throughput is selected so that the fibres on exiting from the shaft, which in the present apparatus is just over 2 metres high, do not adhere together. Further drying of the fibres can take place under ambient conditions outside the shaft. The fibres can alternatively receive a post heating treatment. The finished fibres can be assembled into bundles and cut into predetermined lengths.

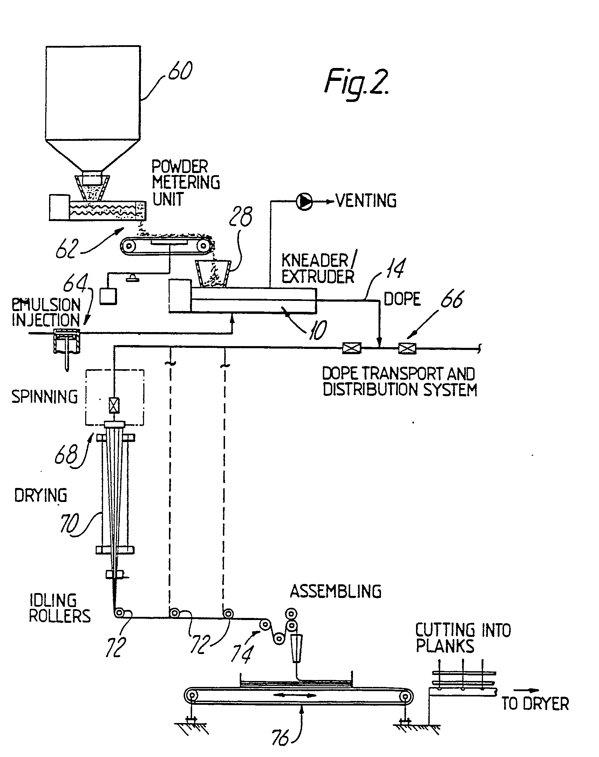

Referring now to Fig. 2 the same reference numerals are employed in Figure 2 as are used for like elements of Figure 1. The apparatus of Figure 2 includes a storage hopper 60 which feeds dry protein-containing starting material to a powder metering unit 62. The unit 62 delivers the dry material continuously to the hopper 28 of the extruder at a rate dependent on the injection of the aqueous solution from unit 64. The plastic mass extruded by the extruder enters a dope transport and distribution system 66 which feeds the mass under pressure to a plurality of spinning heads 68, only one of which is illustrated in Figure 2. The fibres formed by each spinning head 68 are dried by hot air in respective drying shafts 70, are drawn out from the base of their respective shaft and are fed around respective idling rollers 72 to be collected together by an assembling unit 74. The collected bundles of fibres are formed into a single skein by means of an alternating conveyor belt 76 and are then chopped transversely into planks or blocks. Sufficient moisture is retained in the fibres on exiting from the drying shaft to allow the individual fibres to adhere together to form the planks or blocks. The planks or blocks can then be further dried to render them suitable for storage or alternatively they may be incorporated after rehydration with, for example, steam into a foodstuff.

Each of the following examples illustrating the present process was carried out on the apparatus described above with reference to Figure 1. In each case the spinneret employed had 70 holes, each with a diameter of 0.5 mm, arranged in two concentric circles. Except where otherwise stated the rennet casein employed in each example is commercially available spray dried rennet casein as described above.

### Example 1

1800 grams of rennet casein and 1200 grams calcium caseinate were mixed with 3000 grams of tap water at 10°C. The resulting mixture was granular in texture and was added to the inlet hopper of the extruder 10. The extruder screw 26 kneaded the mixture into a plastic mass as it passed along the extruder barrel. The temperature and pressure increased along the barrel, the temperature regulators 30, 32 and 34 recording temperatures of 10°, 60° and 75°C respectively. The highest pressure recorded at the head of the extruder was 17 bar. The average residence time of the mixture in the barrel was about 2 mins. The plastic mass exiting from the extruder was fed through the tubular component 14 to the spinneret 23 at which a temperature of 80°C was maintained. The pressure build-up in the extruder was sufficient to force the plastic mass through the holes in the spinneret so that they formed a plurality of continuous filaments which could be guided around the roller 48 to the rollers 50. Hot air at a temperature of 140°C entered the shaft at the inlet port 20 and was passed upwards through the shaft at a rate of 245 metres³/hour to dry the fibres.

### Example 2

600 gram rennet casein and 2400 gram calcium caseinate were mixed with 3000 gram of tap water at 10°C. The same procedure was followed as in Example 1 under the following conditions. The maximum pressure developed in the extruder was about 14 bar, the temperature increasing along the extruder barrel from 10° to 60° to 80°C. The temperature at the spinneret head 38 was 75°C and the temperature of the hot air entering the shaft was 140°C. The drying air had a throughput of 300 metres³/hour. The moisture content of the air increased from 12% at the inlet port to 34% at the outlet port. The high calcium caseinate content necessitated post heating of the fibres at 110°C for 16 minutes.

### Example 3

A mixture of 1500 gram rennet casein, 643 gram acid casein and 1750 gram tap water at 10°C was fed through the hopper of the extruder. The same procedure was followed as in Example 1. The maximum temperature in the extruder was 75°C and the temperature at the spinneret head was 80°C. Hot air at an inlet temperature of 140°C was passed up the shaft at a rate of 255 metres³/hour.

### Example 4

900 gram of a soya concentrate known as "Unico 75" and supplied by Unimills, Zwijndrecht, Holland, was mixed with 2100 gram rennet casein and 2450 gram H₂O at 10°C and added to the inlet hopper of the extruder. Following the procedure of Example 1 a maximum pressure of 20 bar was developed in the extruder and a maxima temperature of 80°C recorded at the extruder head. Hot air at a temperature of 130°C was passed up the drying shaft and reduced the moisture content of the fibres to less than about 30% by weight. On exiting from the drying shaft and cooling to an ambient temperature further water evaporated from the fibres to leave them with a residual moisture content of less than about 10%.

### Example 5

900 gram of soya protein isolate called "Unisol N" as supplied by Unimills, Zwijndrecht, Holland, was mixed with 2100 gram rennet casein and 2450 gram tap water at 10°C. Following the procedure of Example 1 this mixture was fed through the extruder in which the maximum pressure of 20 bar was developed and a maximum temperature of 75°C reached. The temperature at the spinneret head was 80°C and the temperature of the hot drying air was 130°C which reduced the moisture content of the fibres to about 30 wt%.

### Example 6

A mixture of 1600 gram rennet casein, 400 gram skimmed milk powder and 1330 gram $H_2O$ was fed through the extruder employing the procedure of Example 1. The temperature in the extruder barrel increased from 10°C nearest the hopper to 75°C nearest the extrude head. The temperature of the spinning head was 80°C and the temperature of the drying air was 140°C, the throughput of the air being 250 metre³/hour.

### Example 7

Using the same conditions and procedure as in Example 6 a mixture of 1400 gram rennet casein, 600 gram skim milk powder and 1330 gram $H_2O$ was added to the extruder and spun into fibres by the spinning head.

### Example 8

Following the procedure of Example 1 the mixture added to the extruder comprised rennet casein and water only, the water comprising 45% by weight of the total mix. The temperature increased along the extruder barrel from 10° to 75° and 80°C. The plastic mass formed in the barrel was fed to the spinning head through which the mass passed to form a plurality of fibres.

### Example 9

Under the same conditions as Example 8 fibres were spun from a plastic mass formed from a rennet casein and water mixture comprising 42% water and 48% freeze dried rennet casein prepared by the method described above.

### Example 10

1200 gram of Unico 75 were mixed with 1800 gram rennet casein and 2500 gram tap water at 10°C and fed to the inlet hopper of the extruder. The temperatures recorded along the extruder barrel were 65, 70 and 75°C respectively. A temperature of 85°C and a pressure of 60 bar were recorded at the spinneret head. Hot air at a temperature of 142°C entered the drying shaft and exited at a temperature of 94°C.

### Example 11

1800 gram rennet casein, 750 gram skim milk powder, 450 gram calcium caseinate and 2100 gram water were mixed together and fed to the extruder. The temperatures of the plastic mass formed in the extruder were the same as those recorded in Example 10. The pressure developed at the spinneret head was however of the order of 40 bar. Hot air entered the drying shaft at 141°C and exited at 92°C.

### Example 12

1800 gram rennet casein, 450 gram gluten, 750 gram Unico 75 and 2500 gram tap water were mixed together and added to the extruder. The temperatures recorded along the extruder barrel were the same as those of Example 4. The pressure measured by sensor 38 was of the order of 34 bar and the temperature measured at the spinneret head was 80°C. Hot air entered the drying shaft at 142°C and exited at a temperature of 94°C.

### Example 13

2100 gram rennet casein and 900 gram calcium caseinate were mixed with 2500 gram tap water at 10°C are fed to the extruder. The temperatures measured along the extruder increased from 60 to 75°C. At the spinneret head a temperature of 80°C and a pressure of 66 bar were recorded. Air entered the drying shaft at 141°C and exited at a temperature of 86°C.

Continuous fibres were successfully spun in each Examples 1 to 14 and, on rehydration, were suitable for use as a meat or fish analogue or extruder. In particular the fibres did not disintegrate in a 2% NaCl solution at 100°C, but retained a degree of resilience and tensile strength making them suitable for inclusion in pastries, burgers, stews, pie fillings and the like. By comparison a plastic mass comprising a 50:50 mixture of rennet casein and skim milk powder and 40% tap water when extruded under the operating conditions of Example 6 produced fibres which were of a variable length and usually measured less than 1 metre. The dried fibres moreover disintegrated on rehydration and failed to retain their fibrous form.

Although difficult to devise a quantitative test by which to predict the organoleptic properties of a fibre the measurements given in Table I and II have been made on fibres prepared according to the present process. Table I gives some physical characteristics of the fibres, whilst Table II relates to a panel observation of the mouthfeel of the same fibres, the time given being the average time taken for members of the panel to lose the sensation of chewing separate fibres.

TABLE I

| Protein Composition | Tensile properties | | Swelling properties* | | | % Rehydration |
|---|---|---|---|---|---|---|
| | Elastic modulus (kN/m2) | Breaking Strength (kN/m2) | Dry Cross section (sq mm) | Wet Cross section (sq mm) | % increase | ie weight wet fibres ──────── × 100 weight dry fibres |
| 100% Rennet casein | 182 | 93 | 0.096 | 0.159 | 65 | 176 |
| 70% Rennet casein 30% Acid casein | 125 | 82 | 0.103 | 0.158 | 53 | 183 |
| 70% Rennet casein 30% Soy isolate | 195 | 167 | 0.064 | 0.163 | 153 | not measured |
| 70% Rennet casein 30% Soy concentrate | 180 | 116 | 0.049 | 0.155 | 213 | 221 |
| 80% Rennet casein 20% Skimmed milk powder | 97 | 48 | 0.082 | 0.206 | 149 | not measured |
| 70% Rennet casein 30% Skimmed milk powder | 49 | 42 | 0.063 | 0.367 | 480 | 238 |

*The swelling is done by immersion in boiling tap water for 5 minutes.

TABLE II

| | Fibre | Time (secs) | Appreciation |
|---|---|---|---|
| 1. | 100% Rennet casein | >15 | tough, not very succulent |
| 2. | 70% Rennet casein 30% Acid casein | 15 | similar to 1 |
| 3. | 70% Rennet casein 30% Soy isolate | 12—15 | less tough and more succulent than 1 |
| 4. | 70% Rennet casein 30% Soy concentrate | 12—15 | less tough and more succulent than 1 |
| 5. | 80% Rennet casein 20% Skimmed milk powder | 10—12 | significantly less tough and more succulent than 1 & 2 |
| 6. | 70% Rennet casein 30% Skimmed milk powder | 10—12 | significantly less tough and more succulent than 1 & 2 |

Comparison of the data in the two tables shows that the succulence of a fibre is mainly determined by the water uptake of the fibre on rehydration. In order to resemble meat or fish the fibre must however have a certain elasticity and breaking strength. The toughness of a fibre comprising 100% rennet casein protein can thus be attributed to its relatively high breaking strength, i.e. its inability to be broken down quickly in the mouth by chewing, together with its relatively low uptake of water on rehydration. The similarity in response between the acid casein-containing fibre and that containing 100% rennet casein is probably due to the lower breaking strength in the former compensating for its lower water uptake and lower elasticity. The better acceptance by the panel of the fibres containing soy protein is apparently due to the high water content of the rehydrated fibres which increases the succulence of the fibres and seems to offset the effect of the increase in breaking strength. The most succulent fibre was found to be that having the highest water uptake on rehydration and the lower breaking strength.

Fibres prepared according to Example 4 above comprising 70% rennet casein and 30% soya concentrate were used to replace a portion of chicken meat in a preparation in the form of diced cubes which can be used in sauces, pie fillings, stews or the like. 358 gram of the dry fibres were rehydrated in boiling water for 5 minutes and then rinsed and cooled. The water uptake of the fibre was just over 200% by weight, the wet fibres weighing 720 gram. The wet fibres were chopped into short lengths and mixed with the following ingredients in the proportions stated: 26 wt% fibres; 42 wt% comminuted raw chicken meat; 10 wt% fat emulsion; and 22% aqueous solution containing salt and added flavouring. The resulting mixture was heat set in a mould for 30 minutes at 95°C. On removal from the mould the chicken preparation was diced into cubes and cooked and was then ready for use as desired. In the diced cubes the fibres retained their fibrous texture and enhanced the overall texture of the product. The colour of the fibres moreover closely matched that of the chicken meat.

**Claims**

1. A process for preparing a textured casein-containing material by extruding into a gaseous medium a plastic mass containing water and a proteinaceous material incorporating rennet casein characterised by extruding into a gaseous medium so as to form an extrudate a plastic mass containing a proteinaceous material comprising at least about 60 wt% of either rennet casein or a mixture including rennet casein and a caseinate salt, at least about 20 wt%, based on the total weight of the proteinaceous material, of the said mixture comprising rennet casein.

2. A process according to Claim 1 including drying the said extrudate.

3. A process according to Claim 1 or Claim 2 wherein the proteinaceous material includes acid casein, skimmed milk powder, gluten or vegetable or meat or fish or single cell protein isolates or concentrates or any mixture thereof.

4. A process according to any one of Claims 1 to 3 wherein the caseinate salt comprises calcium or sodium caseinate or a mixture thereof.

5. A process according to any one of the preceding claims wherein the pH of the plastic mass lies in the range of from 6.0 to 7.0.

6. A process according to Claim 5 wherein the said pH lies in the range of from 6.2 to 6.5.

7. A process according to any one of the preceding claims wherein the plastic mass is extruded at a temperature of less than 100°C.

8. A process according to any one of the preceding claims wherein the extrudate is heated at a temperature of between about 100 and 200°C.

9. A process according to any one of the preceding claims wherein the extrudate is in the form of fibres, bands, ribbons, tubes, or discrete units.

10. A textured casein-containing material produced by extrusion into a gaseous medium characterised in that the material includes a proteinaceous material comprising at least about 60 wt% of either rennet casein or a mixture of rennet casein and a caseinate salt at least 20 wt% of the mixture, based on the total weight of the proteinaceous material, comprising rennet casein.

11. A material according to Claim 10 including acid casein, skimmed milk powder, whey protein, or vegetable or meat or fish or single cell protein isolates or concentrates or any mixture thereof.

12. A foodstuff incorporating a textured rennet casein-containing material according to Claim 10 or Claim 11.

**Patentansprüche**

1. Verfahren zur Herstellung eines texturierten Kasein enthaltenden Materials durch Extrudieren einer plastischen Masse in ein gasförmiges Medium, die Wasser und ein Labkasein einschließendes proteinhaltiges Material enthält, dadurch gekennzeichnet, daß man eine plastische Masse in ein gasförmiges Medium so extrudiert, daß ein Extrudat gebildet wird, wobei die plastische Masse ein proteinhaltiges Material enthält, welches wenigstens etwa 60 Gew.% Labkasein oder einer Mischung aus Labkasein und einem Kaseinatsalz umfaßt, wobei die Menge des Labkaseins in der Mischung derart ist, daß sie wenigstens etwa 20 Gew.%, bezogen auf das Gesamtgewicht, des proteinhaltigen Materials beträgt.

2. Verfahren nach Anspruch 1, dadurch gekennzeichnet, daß das genannte Extrudat getrocknet wird.

3. Verfahren nach Anspruch 1 oder 2, dadurch gekennzeichnet, daß das proteinhaltige Material Säurekasein, Magermilchpulver, Gluten oder pflanzliche oder Fisch- oder Einzelzellenprotein-Isolate oder -Konzentrate oder irgendeine Mischung hiervon enthält.

4. Verfahren nach einem der Ansprüche 1 bis 3, dadurch gekennzeichnet, daß das Kaseinatsalz Calcium- oder Natriumkaseinat oder ein Gemisch hiervon umfaßt.

5. Verfahren nach einem der Ansprüche 1 bis 4, dadurch gekennzeichnet, daß der pH-Wert der plastischen Masse im Bereich von 6,0 bis 7,0 liegt.

6. Verfahren nach Anspruch 5, dadurch gekennzeichnet daß der genannte pH-Wert im Bereich von 6,2 bis 6,5 liegt.

7. Verfahren nach einem der Ansprüche 1 bis 6, dadurch gekennzeichnet, daß die plastische Masse bei einer Temperatur von unterhalb 100°C extrudiert wird.

8. Verfahren nach einem der Ansprüche 1 bis 7, dadurch gekennzeichnet, daß das Extrudat auf eine Temperatur zwischen etwa 100 und 200°C erhitzt wird.

9. Verfahren nach einem der Ansprüche 1 bis 8, dadurch gekennzeichnet, daß das Extrudat in Form von Fasern, Fäden, Bändern, Streifen, Schnüren, Rohren oder Schläuchen oder diskreten Einheiten vorliegt.

10. Ein texturiertes Kasein enthaltendes Material, das durch Extrudieren in ein gasförmiges Medium hergestellt wurde, dadurch gekennzeichnet, daß das Material ein proteinhaltiges Material umfaßt, welches wenigstens etwa 60 Gew.% Labkasein oder einer Mischung aus Labkasein und einem Kaseinatsalz umfaßt, wobei die Menge des Labkaseins in der Mischung derart ist, daß sie wenigstens etwa 20 Gew.%, bezogen auf das Gesamtgewicht, des proteinhaltigen Materials beträgt.

11. Material nach Anspruch 10, dadurch gekennzeichnet, daß es Säurekasein, Magermilchpulver, Molkeprotein oder pflanzliche oder Fleisch- oder Fisch- oder Einzelzellenprotein-Isolate oder -Konzentrate oder irgendeine Mischung hiervon enthält.

12. Ein Nahrungsmittel, welchem ein texturiertes Labkasein enthaltendes Material nach Anspruch 10 oder 11 einverleibt ist.

**Revendications**

1. Procédé pour la préparation d'un matériau à texture contenant de la caséine par une extrusion dans un milieu gazeux d'une masse plastique contenant de l'eau et un matériau protéinique comportant de la caséine de présure, caractérisé par l'extrusion dans un milieu gazeux, de façon à former un matériau extrudé d'une masse plastique contenant un matériau protéinique comprenant au moins environ 60% en poids soit de caséine de présure, soit d'un mélange comportant de la caséine de présure et un sel de caséinate, au moins environ 20% en poids, basés sur le poids total du matériau protéinique, du dit mélange comprenant de la caséine de présure.

2. Procédé selon la Revendication 1 comportant un séchage du dit matériau extrudé.

3. Procédé selon les Revendications 1 ou 2 dans lequel le matériau proténique comporte de la caséine acide, de la poudre de lait écrémé, du gluten ou des concentrés ou des matériaux isolés de légume ou de viande ou de poisson ou de protéine à cellule unique ou n'importe quel mélange de ceux-ci.

4. Procédé selon l'une des Revendications 1 à 3 dans lequel le sel de caséinate comprend un caséinate de calcium ou de sodium ou un mélange de ceux-ci.

5. Procédé selon l'une des revendications précédentes dans lequel le pH de la masse plastique est dans l'intervalle de 6,0 à 7,0.

6. Procédé selon la Revendication 5 dans lequel le dit pH est dans l'intervalle de 6,2 à 6,5.

7. Procédé selon l'une des revendications précédentes dans lequel la masse plastique est extrudée à une température inférieure à 100°C.

8. Procédé selon l'une des revendications précédentes dans lequel le matériau extrudé est chauffé à une température comprise entre environ 100 et 200°C.

9. Procédé selon l'une des revendications précédentes dans lequel le matériau extrudé est sous la forme de fibres, de bandes, de rubans, de tubes ou d'unités separées.

10. Matériau à texture contenant de la caséine produit par une extrusion dans un milieu gazeux caractérisé en ce que le matériau comporte un matériau protéinique comprenant au moins environ 60% en poids soit de caséine de présure, soit d'un mélange de caséine de présure et d'un sel de caséinate, au moins 20% en poids du mélange, basés sur le poids total du matériau protéinique, comprenant de la caséine de présure.

11. Matériau selon la Revendication 10, comprenant de la caséine acide, de la poudre de lait écrémé, de la protéine de petit lait, ou des concentrés ou des matériaux isolés de légume ou de viande ou de poisson ou de protéine à cellule unique ou n'importe quel mélange de ceux-ci.

12. Denrée alimentaire comportant un matériau à texture contenant de la caséine de présure selon les Revendications 10 ou 11.

Fig.1.

EXTRUDER

STEAM
6ATM

HEATER
10°–150°
500Nm2/h

Φ150

50%    50%

Φ150

Φ100

AIR

STEAM
HEATER

STEAM
6ATM

POST-TREATMENT

WATER
SEPARATOR

STEAM
6ATM

WATER

0 051 423

Fig.2.